# FASCICULE DE BREVET EUROPEEN

(11) **EP 1 032 527 B1**
(45) Date de publication et mention de la délivrance du brevet: **28.04.2004**
(21) Numéro de dépôt: 99946253.4
(22) Date de dépôt: 28.09.1999
(51) Int. Cl.: B62D 25/08, B62D 29/00

(54) **FACADE AVANT COMPOSITE METAL/PLASTIQUE SURMOULEE POUR VEHICULE AUTOMOBILE**
VORDERFRONT AUS VERSTÄRKTER UMGOSSENER METALL- UND KUNSTSTOFFVERBUNDWERKSTOFF FUR KRAFTFAHRZEUGE
OVERMOULDED METAL/PLASTIC COMPOSITE FRONT PANEL FOR MOTOR VEHICLE

(30) Priorité: 30.09.1998 FR 9812230
(43) Date de publication de la demande: 06.09.2000
(73) Titulaire: VALEO THERMIQUE MOTEUR, 78321 La Verrière (FR); VALEO VISION, 93000 Bobigny (FR)
(72) Inventeur: GUYOMARD, Jean-Nicolas, F-27930 Le Mesnil Fuguet (FR); SIGONNEAU, Jacques, F-28170 Theuvy-Achères (FR)
(86) Numéro de dépôt international: PCT/FR1999/002305
(87) Numéro de publication internationale: WO 2000/018636

(56) Documents cités:
- EP-A- 0 658 470
- FR-A- 2 761 331
- US-A- 5 575 526
- US-A- 5 658 041

## Description

La présente invention concerne une façade avant composite métal/plastique pour véhicule automobile.

Une telle façade est un élément de structure du véhicule susceptible d'intégrer les divers équipements du véhicule tels que projecteurs, clignotants, avertisseur sonore, échangeur thermique, groupe moto-ventilateur ou module de refroidissement complet, etc.

La façade avant, ainsi pourvue de ces équipements, constitue un module unitaire préparé et livré par l'équipementier, prêt à être monté sur le véhicule par le constructeur.

Le montage de ce module se fait par raccordement à des éléments de structure latéraux du véhicule tels que longerons, ailes ou coque, puis mise en place d'un pare-chocs ou bouclier frontal rapporté sur le module.

Une structure de façade entièrement en matière plastique ne permettant pas de répondre aux exigences de sécurité des essais anti-collision ("crash tests"), il est nécessaire d'associer pour la structure de la façade avant des éléments en matière plastique (pour la légèreté et le faible coût de revient) et des éléments métalliques (pour la tenue mécanique). La technique actuellement employée consiste à emboutir une tôle métallique et à la rapporter sur un support plastique par vissage ou rivetage de douilles de fixation.

Toutefois, l'emboutissage d'une simple tôle ne permet pas de réaliser une pièce de section fermée, qui puisse assurer une tenue mécanique suffisante. Il est donc nécessaire d'augmenter la section de la tôle (rendant l'emboutissage difficile) ou bien d'ajouter une seconde tôle pour fermer la première.

Le document US-A-5658041 décrit, par ailleurs, une façade selon le préambule de la revendication 1.

Toutefois, dans ce document, la tenue mécanique de la structure de la façade avant n'est pas entièrement satisfaisante.

L'un des buts de l'invention est de pallier cet inconvénient, en proposant une structure de façade avant à la fois allégée et renforcée, et qui de plus puisse être réalisée selon un processus le plus simple et économique possible.

Pour cela, l'invention présente les caractéristiques définies à la revendication 1.

Le profilé est très avantageusement un profilé à section fermée, par exemple extrudé ou hydroformé.

Il peut être, en section, partiellement surmoulé, avec une région apparente côté intérieur du véhicule. Il peut également recevoir un faisceau de câbles électriques et/ou un câble de commande mécanique de serrure de capot, ou encore comporter des moyens de fixation à des équipements du véhicule.

Le support est très avantageusement un jambage central comprenant des moyens de fixation à une serrure de capot, d'une part, et à une poutre-bouclier du véhicule, d'autre part. La matière plastique peut alors être conformée de manière à ménager un logement pour la serrure de capot.

D'autres caractéristiques et avantages de l'invention ressortiront de la description détaillée d'un exemple de réalisation ci-dessous, faite en référence aux dessins annexés.

La figure 1 représente en perspective frontale une façade avant selon l'invention.

La figure 2 représente la façade de la figure 1, en perspective arrière.

La figure 3 est une coupe par un plan vertical selon III-III de la figure 1.

Sur les figures, la référence 10 désigne de façon générale la façade avant selon l'invention, qui comporte essentiellement un profilé métallique transversal 12 s'étendant sur toute la largeur de cette façade et pourvu à ses extrémités de trous 14 de fixation à des longerons ou à des ailes du véhicule, de manière à assurer la rigidité mécanique du châssis de ce dernier. Ces extrémités sont usinées ou déformées pour s'adapter aux fixations sur le véhicule.

Avantageusement, ce profilé est un profilé à section fermée, par exemple réalisé par extrusion ou hydroformage selon des techniques en elles-mêmes classiques. La section fermée procure une rigidité fortement accrue par rapport à un profilé à section ouverte.

La façade comporte également un autre élément métallique, à savoir un jambage central 16 comportant à son extrémité libre inférieur un trou 18 de fixation à la poutre du bouclier ou du pare-chocs du véhicule. A son autre extrémité le jambage 16 est pourvu d'un trou 20 destiné à coopérer avec la serrure du capot du véhicule, le jambage 16 assurant ainsi, capot fermé, la liaison mécanique entre le capot et le bouclier pour contribuer à la rigidification d'ensemble de la structure du véhicule.

Le reste de la façade est réalisé en une matière plastique appropriée, thermodurcissable ou thermoplastique, par exemple un polyamide armé de fibres de verre (ce choix n'étant bien entendu aucunement limitatif) moulée par injection sous pression.

De façon caractéristique de l'invention, les éléments métalliques de la façade avant, à savoir le profilé 12 et le jambage 16, sont des pièces distinctes qui sont réunies et solidarisées entre elles par la matière plastique 22, directement lors de l'opération de moulage de la façade.

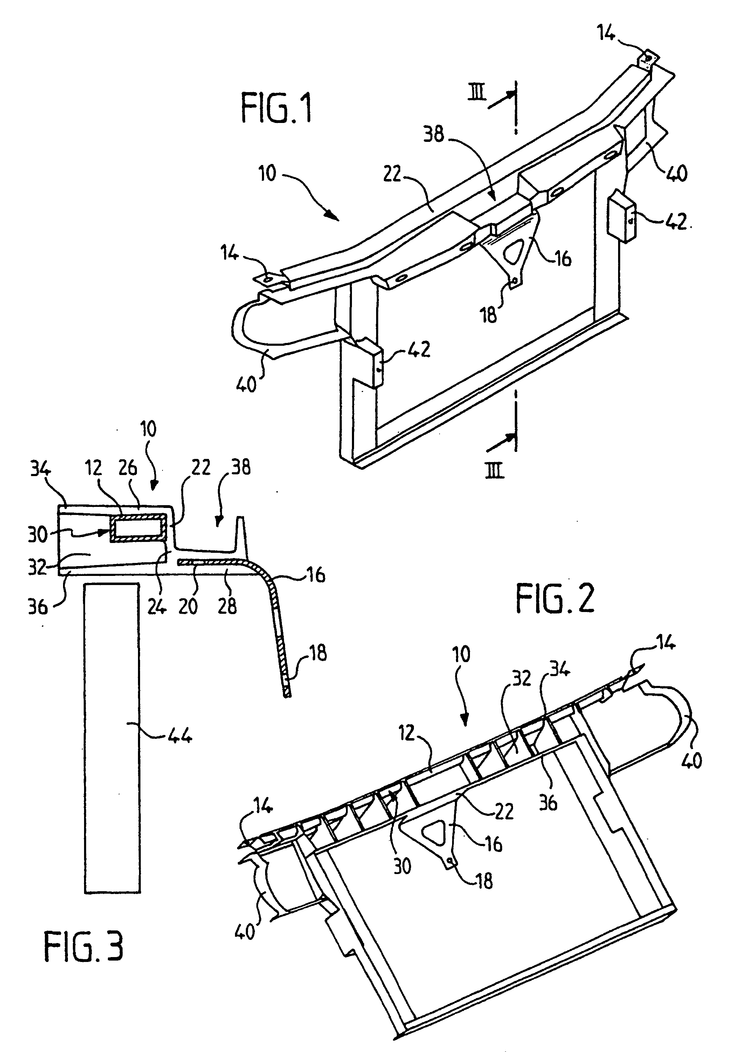

De la sorte, les parties métalliques sont reliées entre elles par de la matière plastique (en 24 sur la figure 3), sans qu'il soit nécessaire de les solidariser au préalable par assemblage vissé ou riveté, par soudage, etc., puisque les pièces métalliques sont directement surmoulées par la matière plastique. On fait ainsi l'économie de cette étape d'assemblage sur la chaîne de fabrication.

Pour le surmoulage, on peut utiliser par exemple la technique de réalisation d'un élément composite métal/plastique exposée dans le EP-A-0 370 342, auquel on pourra se référer pour de plus amples détails sur la mise en oeuvre du surmoulage et les matériaux qui peuvent être utilisés à cet effet.

Les éléments métalliques 12 et 16 sont partiellement noyés dans la matière plastique, comme en 26 et 28 sur la figure 3, pour permettre leur solidarisation. Certaines parties, notamment du profilé, peuvent être laissées apparentes, comme en 30, le profilé étant alors visible de l'arrière (figure 2) lorsque le capot est ouvert.

Le profilé peut en outre permettre le passage ou la fixation de câbles électriques ou du câble de commande de la serrure du capot.

Outre la solidarisation mécanique des éléments métalliques, le surmoulage permet de former par exemple des nervures 32 s'étendant entre des ailes 34, 36 pour accroître la rigidité de l'ensemble, et également ménager un logement 38 pour la serrure du capot (qui viendra se crocheter dans l'orifice 20 du jambage 16).

Le reste de la façade comporte également, de manière en elle-même connue, des parties de structure telles que 40 aptes à recevoir des blocs optiques, ou telles que 42 pour la fixation à la poutre du bouclier en plus de la fixation au point 18 du jambage 16.

En variante ou en complément, la façade avant peut comporter d'autres éléments métalliques, par exemple des pattes de fixation latérales, des jambages supplémentaires, etc., par exemple pour la fixation d'un module de refroidissement 44 (figure 3). Les parties métalliques sont, ici encore, toutes reliées entre elles et au profilé par la matière plastique surmoulée.

## Revendications

1. Façade avant composite métal/plastique (10) pour véhicule automobile, comprenant un profilé supérieur métallique (12) s'étendant sur toute la largeur de la façade et pourvu de moyens (14) de fixation à des éléments de structure du véhicule, ainsi qu'au moins un support métallique (16) pourvu de moyens (18, 20) de fixation à d'autres éléments de structure ou à des équipement du véhicule, le profilé et le support étant des pièce distinctes, mécaniquement solidarisées entre elles par une matière plastique (22) surmoulée conjointement sur le profilé et le support,
façade **caractérisée en ce que** la matière plastique (22) comporte des ailes (34, 36) et des nervures de renforcement (32) s'étendant entre lesdites ailes.

2. Façade selon la revendication 1, **caractérisée en ce que** le profilé (12) est un profilé à section fermée.

3. Façade selon l'une des revendications 1 et 2, **caractérisée en ce que** le profilé (12) est un profilé extrudé ou hydroformé.

4. Façade selon l'une des revendications 1 à 3, **caractérisée en ce que** le profilé (12) est, en section, partiellement surmoulé, avec une région apparente (30) côté intérieur du véhicule.

5. Façade selon l'une des revendications 1 à 4, **caractérisée en ce que** le profilé (12) est apte à recevoir une faisceau de câbles électriques et/ou un câble de commande mécanique de serrure de capot.

6. Façade selon l'une des revendications 1 à 5, **caractérisée en ce que** le profilé (12) comporte également des moyens de fixation à des équipements du véhicule.

7. Façade selon l'une des revendications 1 à 6, **caractérisée en ce que** le support (16) est un jambage central comprenant des moyens (18, 20) de fixation à une serrure de capot, d'une part, et à une poutre-bouclier du véhicule, d'autre part.

8. Façade selon la revendication 7, **caractérisée en ce que** la matière plastique (22) est conformée de manière à ménager un logement (38) pour la serrure de capot.

## Patentansprüche

1. Vordere Metall/Plastik-Verbundvorderseite (10) für ein Kraftfahrzeug mit einem oberen Metallprofil (12), das sich über die ganze Breite der Vorderseite erstreckt und mit Mitteln (14) zur Befestigung an Strukturelementen des Fahrzeugs versehen ist, sowie mit zumindest einem metallischen Träger (16), der mit Mitteln (18, 20) zur Befestigung an anderen Strukturelementen oder an Ausrüstungsteilen des Fahrzeugs versehen ist, wobei das Profil und der Träger unterschiedliche Teile sind, die durch ein auf das Profil und den Träger gemeinsam aufgeformtes Kunststoffteil (22) mechanisch fest miteinander verbunden sind,
**dadurch gekennzeichnet, dass** das Kunststoffteil (22) Flügel (34, 36) und Versteifungsrippen (32) umfasst, die sich zwischen den Flügeln erstrecken.

2. Vorderseite nach Anspruch 1, **dadurch gekennzeichnet, dass** das Profil (12) ein Profil mit geschlossenem Querschnitt ist.

3. Vorderseite nach Anspruch 1 und 2, **dadurch gekennzeichnet, dass** das Profil (12) ein extrudiertes oder hydrogeformtes Profil ist.

4. Vorderseite nach einem der Ansprüche 1 bis 3, **dadurch gekennzeichnet, dass** das Profil (12) im Querschnitt teilweise überformt ist, wobei es einen freiliegenden Bereich (30) auf der Innenseite des Fahrzeugs aufweist.

5. Vorderseite nach einem der Ansprüche 1 bis 4, **dadurch gekennzeichnet, dass** das Profil (12) ein Bündel von Elektrokabeln und/oder ein Kabel zur mechanischen Betätigung eines Motorhaubenverschlusses aufnehmen kann.

6. Vorderseite nach einem der Ansprüche 1 bis 5, **dadurch gekennzeichnet, dass** das Profil (12) ebenso Mittel zur Befestigung an Ausrüstungsteilen des Fahrzeugs umfasst.

7. Vorderseite nach einem der Ansprüche 1 bis 6, **dadurch gekennzeichnet, dass** der Träger (16) ein mittiges Stützglied mit Mitteln (18, 20) zur Befestigung an einem Motorhaubenverschluss einerseits und einem Frontschildträger des Fahrzeugs andererseits ist.

8. Vorderseite nach Anspruch 7, **dadurch gekennzeichnet, dass** das Kunststoffteil (22) so geformt ist, dass es eine Aufnahme (38) für den Motorhaubenverschluss beherbergt.

## Claims

1. Metal/plastic composite front panel (10) for a motor vehicle, comprising an upper metal profile (12) extending over the whole width of the panel and provided with means (14) of attachment to structural elements of the vehicle, and also at least one metal support (16) provided with means (18, 20) of attachment to other structural elements or to items of equipment of the vehicle, the profile and the support being separate components that are mechanically joined together by a plastic (22) overmoulded jointly on the profile and the support, this panel being **characterized in that** the plastic (22) has wings (34, 36) and strengthening ribs (32) extending between the said wings.

2. Panel according to Claim 1, **characterized in that** the profile (12) is a profile of closed cross section.

3. Panel according to either of Claims 1 and 2, **characterized in that** the profile (12) is an extruded or hydroformed profile.

4. Panel according to one of Claims 1 to 3, **characterized in that** the profile (12) is partially overmoulded, in cross section, with a visible region (30) on the inner side of the vehicle.

5. Panel according to one of Claims 1 to 4, **characterized in that** the profile (12) is able to receive a bundle of electric cables and/or a cable for mechanically operating the bonnet catch.

6. Panel according to one of Claims 1 to 5, **characterized in that** the profile (12) also has means of attachment to items of equipment of the vehicle.

7. Panel according to one of Claims 1 to 6, **characterized in that** the support (16) is a central prop comprising means (18, 20) of attachment to a bonnet catch, on the one hand, and to a filler panel spar of the vehicle, on the other hand.

8. Panel according to Claim 7, **characterized in that** the plastic (22) is shaped so as to form a seat (38) for the bonnet catch.
